# FASCICULE DE BREVET EUROPEEN

(11) **EP 2 790 124 B1**
(45) Date de publication et mention de la délivrance du brevet: **05.08.2015**
(21) Numéro de dépôt: 14164234.8
(22) Date de dépôt: 10.04.2014
(51) Int. Cl.: G06F 21/86, G06K 7/00

(54) **Connecteur sécurisé**
Gesicherte Steckverbindung
Secured connector

(30) Priorité: 12.04.2013 FR 1353320
(43) Date de publication de la demande: 15.10.2014
(73) Titulaire: COMPAGNIE INDUSTRIELLE ET FINANCIERE D'INGENIERIE (INGENICO), 75015 Paris (FR)
(72) Inventeur: Pavageau, Stéphane, 26600 Le Roche de Glun (FR); Bonnet, Eric, 26120 Malissard (FR)
(74) Mandataire: Vidon Brevets & Stratégie

(56) Documents cités:
- EP-A1- 1 927 931
- FR-A1- 2 906 623

## Description

### 1 DOMAINE DE L'INVENTION

La présente invention se rapporte au domaine de la protection des dispositifs de lecture de cartes mémoire. De tels dispositifs de lecture de carte mémoire sont employés dans de nombreux appareils tels que des terminaux de paiement, des dispositifs d'authentification ou d'identification ou encore des dispositifs de lecture de contenus.

La présente invention se rapporte plus particulièrement à la sécurisation de tels dispositifs de lecture de cartes mémoire afin qu'il ne soit pas possible de capter ou de surveiller des signaux qui sont échangés au sein du terminal.

### 2 ART ANTÉRIEUR

Les appareils qui intègrent des dispositifs de lecture de carte mémoire, tels que des terminaux de paiement, comprennent de nombreux dispositifs de sécurisation et mettent en oeuvre de nombreuses méthodes permettant d'assurer que les appareils sont utilisés conformément aux usages pour lesquels ils ont été prévus et respectent des normes de sécurité qui sont imposés par des organismes de certification.

Par exemple, dans le domaine des terminaux de paiement pour cartes à puces, les fabricants sont contraints de respecter depuis de 1^{er} mai 2011, la norme PCI PED 3.0 (Payment Card Industry Pin Entry Device).

Cette norme sécuritaire consiste notamment à sécuriser le clavier de saisie des terminaux en protégeant la saisie du code confidentiel, et à bloquer le terminal en cas d'intrusion (frauduleuse ou accidentelle).

On connaît de l'art antérieur des systèmes qui permettent de protéger des circuits électroniques. Parmi ces systèmes, on connaît des dispositifs dont l'objectif est d'empêcher d'atteindre un ou plusieurs signaux donnés. De tels systèmes sont par exemple mis en oeuvre dans des terminaux de paiement afin d'éviter d'atteindre des parties spécifiquement identifiées à l'intérieur du terminal. Un dispositif de ce type est par exemple décrit dans le brevet FR 2944625. Ce dispositif se présente sous la forme d'un bloc globalement de la forme d'un parallélépipède rectangle, comprenant plusieurs couches de circuit imprimé superposées et reliées entre elles à l'aide de vias enterrées. Il se présente sous la forme d'un composant électronique apte à être connecté électriquement à un circuit imprimé sur lequel il est monté. Il comprend par ailleurs une protubérance d'obstruction de l'accès à des points de contact par le dessus du composant. Ce composant est efficace et rempli sa fonction de protection. Ce composant pose cependant au moins deux problèmes. Le premier problème tient au positionnement du composant sur le circuit imprimé. En effet, il est nécessaire de disposer ce composant électronique après les autres, ce qui suppose un montage particulier et engendre des couts supplémentaires. Le deuxième problème tient au fait que ce composant est un composant particulier, qu'il est nécessaire de produire dans des séries relativement faible, ce qui en fait un composant coûteux. Il n'est donc pas possible, ou pas raisonnable, d'utiliser ce composant partout, sauf à augmenter de manière assez conséquente le coût du terminal.

Le document EP-1927931-A1 concerne un agencement de sécurité contre la fraude pour un connecteur électrique pour carte à puce. Le connecteur (figures 9, 10, 11 références 29a, 29b) comporte une plaque inférieure horizontale en matériau isolant qui porte une série de lames de contact (32a, 32b) des plages d'une carte à puce. Chaque lame de contact est déformable élastiquement et disposée parallèlement à une direction horizontale longitudinale et comporte: - une portion supérieure de raccordement (31) avec une plage de contact de la carte à mémoire, qui fait saillie au-dessus de la face supérieure de la plaque inférieure horizontale du connecteur; - et une portion inférieure de raccordement (33) avec une piste conductrice d'une face d'une plaque inférieure à circuits imprimés qui porte le connecteur; L'agencement de sécurité comporte un élément de protection qui porte au moins un circuit conducteur de protection (CI, C2) qui entoure au moins en partie la plaque inférieure du connecteur t qui est raccordé à au moins une des piste d'une face de la plaque à circuits imprimés pour être relié à un circuit de détection. Le circuit de protection (CI, C2) est relié au circuit de détection par l'intermédiaire des lames supplémentaires (68). Le document FR-2906623-A1 se rapporte au domaine de la protection contre les intrusions de terminaux comprenant des données confidentielles et concerne un dispositif anti-intrusion pour carte électronique. Plus précisément, un dispositif anti-intrusion permet de protéger l'accès aux broches d'entrée/sortie (10) d'un connecteur (1) de carte électronique. Le dispositif anti-intrusion comprend un circuit flexible (2), un guide (3), un apot (4) et un joint élastique (5). Le circuit flexible (2) comprend une feuille souple (20) dans laquelle est disposée la piste électriquement conductrice (21). La feuille (20) comprend des languettes disposées de manière à venir en contact avec la paroi intérieure du cadre du guide (3) lorsque le dispositif est assemblé. Le circuit flexible permet de détecter des intrusions du connecteur. La sécurité du connecteur est ainsi assurée.

Il existe donc un besoin d'une solution qui offre une protection au moins équivalente à la protection offerte par ce dispositif de l'art antérieur tout en minimisant ou annulant ses inconvénients.

### 3 RÉSUMÉ DE L'INVENTION

Le système proposé ne présente pas ces inconvénients de l'art antérieur. En effet, le système proposé se présente sous la forme d'un connecteur associé à un circuit imprimé. Plus particulièrement, l'invention porte sur un système de protection d'un signal au sein d'un dispositif électronique. Selon l'invention un tel système comprend :
- un connecteur de forme globalement parallélépipédique rectangle comprenant :
   - à sa base, au moins une terminaison de soudure correspondant à une plage de contact véhiculant ledit signal à protéger;
   - une fente d'insertion d'un circuit imprimé ;
- un circuit imprimé se logeant dans ladite fente d'insertion et conformé de sorte qu'il recouvre ladite terminaison de soudure.

Ainsi, l'invention permet de protéger l'accès à des signaux sensibles sans nécessiter de dispositif de protection complémentaire. En d'autres termes, le circuit imprimé fait office de bouclier de protection.

Selon un mode de réalisation particulier, ledit circuit imprimé se logeant dans ladite fente d'insertion et conformé de sorte qu'il recouvre ladite terminaison de soudure est un circuit imprimé flexible.

Ainsi, la conformation du circuit imprimé faisant office de bouclier de protection est facilitée.

Selon un mode de réalisation particulier, ladite fente d'insertion et ladite au moins une terminaison de soudure sont disposées sur une même face dudit connecteur.

Ainsi, la conformation du circuit imprimé est plus simple.

Selon un mode de réalisation particulier, au moins une deuxième terminaison de soudure est disposée sur une face opposée à celle de ladite fente d'insertion dudit connecteur.

Selon une caractéristique particulière, ledit circuit imprimé comprend, sur au moins l'une de ses faces, au moins une couche de protection.

Selon un mode de réalisation particulier, ladite au moins une couche de protection comprend un circuit électrique treillissé.

Ainsi, il n'est pas possible de percer le circuit imprimé pour tenter d'accéder au signal protégé.

Selon un mode de réalisation particulier, ledit connecteur est un connecteur de type micro SD.

Selon un mode de réalisation particulier, ledit connecteur comprend au moins deux plages de contact, lesdites au moins deux plages de contact étant alignées l'une devant l'autre dans le sens de retrait dudit circuit imprimé.

Ainsi, il est possible de détecter un retrait frauduleux ou non autorisé du circuit imprimé.

### 4 FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre les systèmes de protection de l'art antérieur ;
- les figures 2a et 2b illustrent une première mise en oeuvre du système de protection ;
- La figure 3 illustre un troisième mode de réalisation du système de protection ;
- La figure 4 illustre un mode de réalisation d'un connecteur destiné au système de protection selon l'invention ;
- La figure 5 illustre l'architecture interne du connecteur présenté en figure 4 avec respectivement la position des plages de contact.
- La figure 6 illustre une architecture simplifiée dans un autre mode de réalisation.

### 5 DECRIPTION DETAILLEE DE L'INVENTION

### 5.1. Rappel du principe de l'invention

Comme exposé préalablement, plutôt que de disposer d'un composant électronique particulier qui vient protéger une zone prédéfinie, le système proposé, qui peut être apparenté à un connecteur, incorpore directement la protection souhaitée, ce qui d'une part ne nécessite pas la construction d'un composant particulier et d'autre part facilite le montage. Plus particulièrement, le système proposé est appelé connecteur FPC (de l'anglais « Flexible Printed Circuit », pour circuit imprimé flexible), car c'est bien l'association entre un connecteur et un circuit imprimé (qui peut être flexible, sans toutefois que cela soit une obligation en fonction des modes de réalisation) qui permet de solutionner les problèmes précédemment évoqués.

Pour évaluer correctement l'apport du système proposé, il est nécessaire de reposer le problème technique à la base de la solution précédemment proposée. Dans les terminaux, et plus particulièrement dans les terminaux de paiement, des connecteurs sont utilisés pour connecter des composants ou des éléments entre eux. Par exemple des connecteurs de carte à mémoire sont utilisés pour réaliser une connexion entre la puce d'une carte à puce et le circuit imprimé du terminal. Un connecteur est également utilisé pour connecter une tête de lecture de bande magnétique au circuit imprimé du terminal. D'autres connecteurs sont utilisés pour connecter divers parties du terminal entre elles (comme par exemple la carte mère principale et des cartes additionnelles, comme les cartes de communication, ou un afficheur et une carte principale).

Un connecteur se présente usuellement sous la forme d'une pièce, souvent en matière plastique, au sein de laquelle sont disposés des contacts métalliques (ou à tout le moins conducteurs) qui permettent de relier électriquement des éléments. Ces contacts métalliques peuvent aussi être appelés broches. Le connecteur est soit directement relié au circuit imprimé, comme dans le cas d'un connecteur de carte à mémoire, soit relié au circuit imprimé par l'intermédiaire d'un câble, ce qui est plus rare. A la base du connecteur, les terminaisons de soudure sont :
- soit directement soudées sur le circuit imprimé à l'endroit où elles sont posées (Composants Montés en Surface, ou CMS), SMT en anglais ;
- soit positionnées dans des orifices est soudées par derrière (i.e. sur l'autre face du circuit imprimé). (traversant, ou « pin in paste » en anglais)

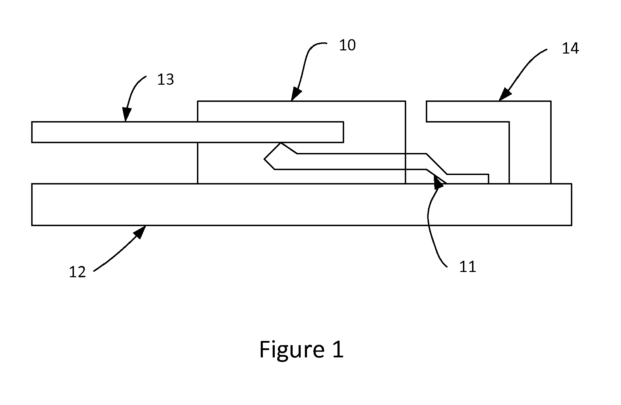

Or, l'utilisation de ces connecteurs pose problème. Bien qu'ils soient pratiques, ces connecteurs induisent des problèmes de sécurité. Il suffit pour un attaquant de réussir à introduire, dans le terminal, un fil conducteur au niveau d'une ou plusieurs terminaisons de soudure métalliques du connecteur pour pouvoir intercepter l'information qui transite entre les éléments reliés par le connecteur. Il est donc nécessaire de protéger l'accès à ces terminaisons de soudure métalliques. C'est ce que les systèmes de l'art antérieur tentent de faire, et notamment le système décrit dans le brevet FR 2944625. La problématique est mieux comprise à la lecture de la figure 1. Dans la configuration classique, un connecteur 10 (pouvant être relié à la fois à un afficheur, une tête magnétique ou une liaison inter cartes) est constitué d'au moins un contact comprenant une terminaison de soudure 11 collée ou soudée à un circuit imprimé 12. Parmi les contacts, au moins un est à protéger (signaux inter UC, signaux I/O, signaux analogiques de la tête magnétique). Dans l'état de l'art actuel, on utilise un connecteur 10 classique. Une nappe 13 est reliée au connecteur 10 et entre en contact avec au moins un contact du connecteur 10. Le connecteur 10 est sécurisé, en protégeant la portion du connecteur ou se trouve la terminaison de soudure à protéger, via une pièce appelé « Cache I/O » ou « Cache connecteur » 14. Ces solutions présentent plusieurs inconvénients :
- Il est nécessaire de « sécuriser » les signaux de protection ;
- il faut souder ce circuit en refusion, avec des signaux qui sont cachés et pas toujours très faciles à maîtriser (notamment en dépannage, quand les moyens de production industriels ne sont pas disponibles pour effectuer ce travail) ce cache I/O est un composant spécifique, réalisé en PCB, découpé de façon non traditionnel (découpe à mi cuir pour faire une marche) ;
- le prix n'est pas négligeable ;
- la fiabilité peut être aléatoire, notamment lorsque le taux d'humidité ambiante est important.

L'invention apporte une solution à ces problèmes de manière simple et élégante : il suffit d'utiliser un circuit imprimé pour venir recouvrir les terminaisons de soudure conductrices. Dès lors, il n'est plus nécessaire de disposer d'un composant spécialement conformé pour protéger les terminaisons de soudure conductrices. L'utilisation du circuit imprimé qui doit être inséré dans le connecteur permet de protéger efficacement les terminaisons de soudure conductrices.

### 5.2. Description de modes de réalisation

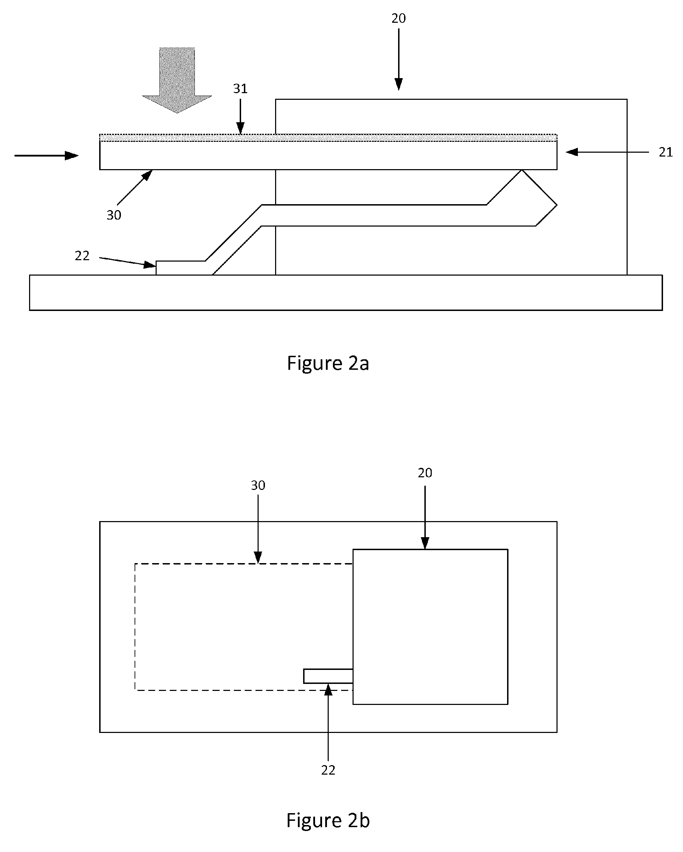

Dans un premier mode de réalisation, afin d'assurer une protection des terminaisons de soudure du connecteur, le circuit imprimé est orienté dans le même sens que les broches. De cette façon, les broches, qui sont soudées ou fixées sur le circuit imprimé, sont recouvertes par le circuit imprimé. On présente, en relation avec les figures 2a, 2b et 2c, ce premier mode de réalisation. Le connecteur 20, qui est l'objet de l'invention, est de forme globalement parallélépipédique rectangle. Il comprend une fente d'insertion 21 permettant l'insertion d'un circuit imprimé 30 (qui peut être flexible ou encore d'une circuit imprimé rigide). Il comprend également au moins une terminaison de soudure 22. Comme indiqué sur les figures, la terminaison de soudure 22 sort du connecteur 20 sous la fente d'insertion 21. Dès lors, le circuit imprimé 30 est situé, une fois connecté, au-dessus de la terminaison de soudure 22. La terminaison de soudure 22 est donc protégée, par le dessus, par le circuit imprimé 30. En d'autres termes, dans ce mode de réalisation, le connecteur utilisé possède donc des terminaisons de soudure (les terminaisons de soudure) qui se situent du même côté que la fente d'insertion du connecteur 20. Dans ce premier mode de réalisation, le circuit imprimé 30 recouvre ainsi la terminaison de soudure à protéger sans qu'il soit nécessaire de prévoir un composant de protection supplémentaire.

Dans un deuxième mode de réalisation, également présenté en relation avec les figures 2a, 2b et 2c, le circuit imprimé 30 comprend en outre un treillis de protection 31. Ce treillis de protection 31 permet de se prémunir d'un accès ou d'un perçage non autorisé du circuit imprimé en vue d'atteindre la terminaison de soudure 22. Ainsi, la combinaison d'un circuit imprimé comprenant un treillis de protection avec le connecteur permet d'offrir le même degré de sécurisation que l'utilisation d'un composant supplémentaire.

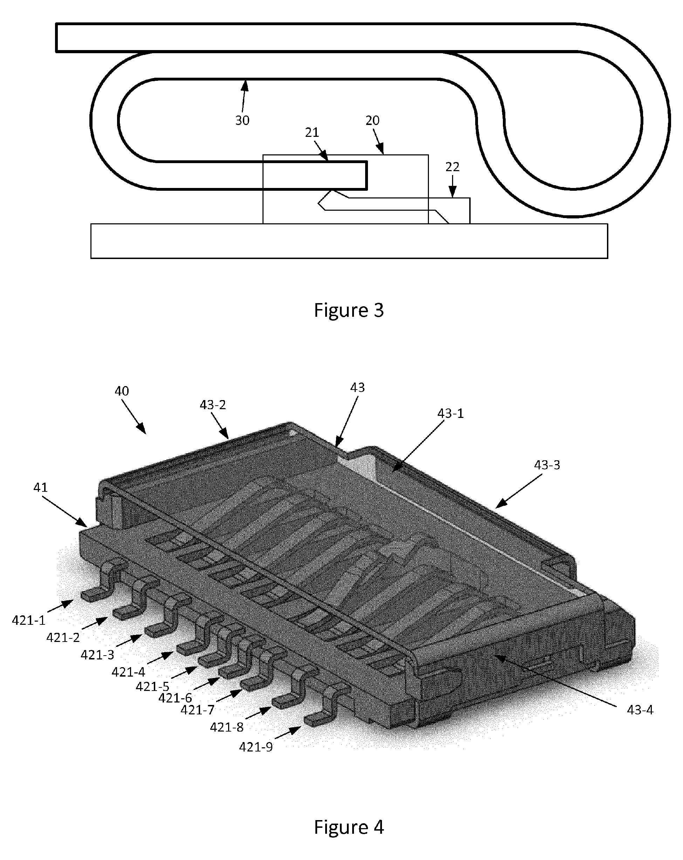

Dans un troisième mode de réalisation, décrit en relation avec la figure 3, le connecteur 20 utilisé possède des terminaisons de soudure (les terminaisons de soudures) qui se situent du côté opposé à la fente d'insertion du connecteur 20. Dans ce cas, le circuit imprimé 30 est un circuit imprimé flexible qui est conformé pour recouvrir la ou les terminaisons de soudures à protéger.

### 5.3. Description d'un connecteur particulier

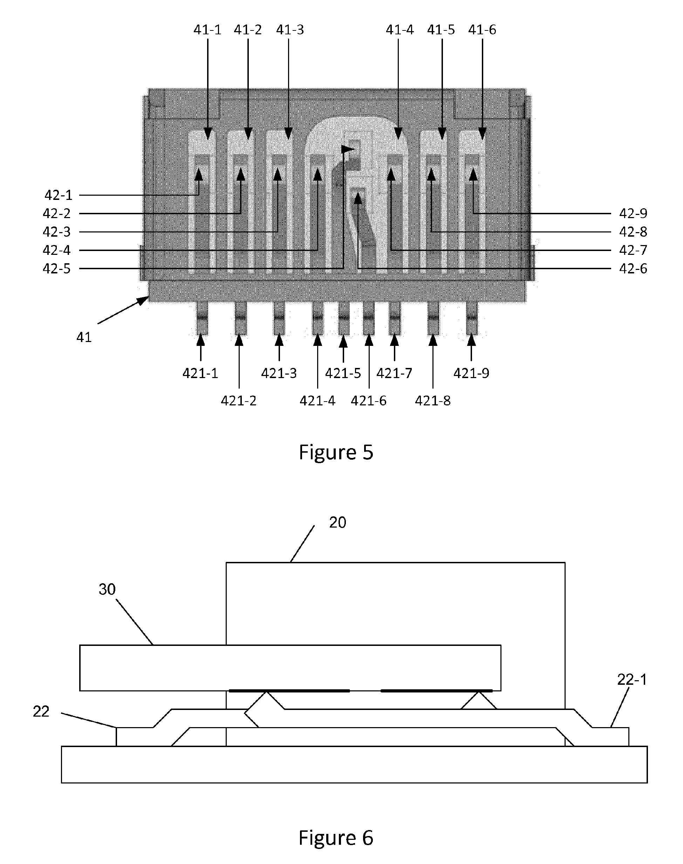

On décrit, en relation avec les figures 4, et 5, un connecteur particulier destiné à être utilisé dans le cadre d'un système selon l'invention. Il s'agit d'un connecteur (40) de forme globalement parallélépipédique rectangle.

Le connecteur (40) comprend une base rectangulaire (41) sur laquelle est fixé un élément de couverture rigide (43). Sur la figure 4, l'élément de couverture (43) est représenté en transparence. Sur les figures 5a et 5b, cet élément de couverture rigide n'est pas représenté.

La base rectangulaire (41) comprend des orifices (41-1 à 41-6) de forme rectangulaire au sein desquels sont insérées des plages de contact (42-1 à 42-9) sur des lamelles conductrices (par exemple métalliques). Ces lamelles conductrices se prolongent par des terminaisons de soudure (421-1 à 421-9) qui dépassent de la base rectangulaire (41) et qui permettent de relier les plages de contact du connecteur (40) à un circuit imprimé (comme par exemple une carte mère d'un terminal).

L'élément de couverture rigide (43) comprend une surface rectangulaire (43-1) sensiblement de la même taille que la base rectangulaire du connecteur. L'élément de couverture rigide (43) comprend également trois côtés (43-2 à 43-4) permettant de créer une fente d'insertion d'un flexible. En fonction de la manière dont l'élément de couverture rigide (43) est positionné sur la base rectangulaire (41), la fente d'insertion peut donc être soit du même côté que les terminaisons de soudure, soit dans le côté opposé. Dans le mode de réalisation présenté présentement, la fente d'insertion et les terminaisons de soudure sont du même côté.

En sus des caractéristiques précédentes, dans ce mode de réalisation, au moins deux plages (42-5, 42-6) de contact sont alignées dans le sens d'introduction du circuit imprimé (ou de la carte à puce). Cet alignement permet de détecter, du circuit imprimé (ou de la carte à puce) par un mouvement de translation, de produire un court-circuit entre les deux plages (42-5, 42-6) de contact. Ainsi, il est possible de détecter une tentative de retrait frauduleux du circuit imprimé (ou de la carte à puce) et de mettre en oeuvre de mesures de sécurité adaptées.

En effet, une des difficultés, avec le système de l'invention est de prévenir un retrait du circuit imprimé ou rigide qui est inséré dans la fente. Or, si ce retrait peut être réalisé sans difficulté, la protection offerte par l'invention peut être d'intérêt moindre. Comme indiqué précédemment, dans ce mode de réalisation particulier, deux plages de contact sont alignées dans le sens de l'insertion. Comme on le voit sur la figure 5, cela suppose que les plages de contact du circuit imprimé qui est inséré dans la fente (par exemple le circuit imprimé) soient décalées afin d'entrer en contact avec la plage de contact prévue à cet effet sur le connecteur. Lors d'un retrait non autorisé, la plage de contact du circuit imprimé (par exemple le circuit imprimé) que l'on tente de retirer (nommée plageFPC) entre en contact avec la plage 42-6. Cette plage FPC est, lors de l'utilisation correcte en contact avec la plage 42-5. Comme les plages 42-5 et 42-6 sont alignées, la plageFPC est lors du retrait obligatoirement connectée, à un moment donné, à la plage 42-6. Ainsi, lors de ce contact, on provoque un court-circuit qui est détecté et qui permet d'activer les mesures de protection adéquat.

### 5.4. Description d'un deuxième connecteur particulier

Dans un autre mode de réalisation de l'invention, décrit en relation avec la figure 6, et pour lequel les numérotations précédentes sont conservées, on utilise un principe identique à celui présenté préalablement pour le connecteur 40. À la différence de celui-ci cependant, on met en oeuvre un connecteur décalé. Le principe est le suivant : plutôt que d'avoir à concevoir un connecteur avec au moins deux plages alignées dans le sens d'insertion et de retrait du circuit imprimé, on utilise un connecteur décalé, comprenant des terminaisons de soudures 22 s'étendant du côté de l'insertion du circuit imprimé 30 et des terminaisons de soudure 22-1 s'étendant du côté opposé. Dans ce mode de réalisation, les plages de contact qui sont issues des lamelles dont les terminaisons de soudure 22 sont du côté de l'insertion sont utilisées pour transmettre le signal. Ces terminaisons de soudures sont donc protégées par le circuit imprimé 30 qui est inséré dans la fente d'insertion. Les plages de contact qui sont issues des lamelles dont les terminaisons de soudure 22-1 sont du côté opposé de l'insertion sont connectées à la masse. Lors d'un retrait non autorisé du circuit imprimé, la plage de contact associée aux lames avant n'est plus en contact avec la lame avant correspondante. Ainsi, le fait que cette plage de contact ne soit plus en contact avec la lame avant peut donc être détecté. Il est donc possible de déclencher des mesures de sécurisation à la détection.

De plus, cette plage de contact associée aux lames avant serait en contact, lors du déplacement avec la lame arrière. On peut donc ainsi détecter une rupture de contact et/ou un établissement d'un contact non autoriser.

## Revendications

1. Système de protection d'un signal au sein d'un dispositif électronique, système **caractérisé en ce qu'**il comprend :
- un connecteur (20) de forme globalement parallélépipédique rectangle comprenant :
- à sa base, au moins une terminaison de soudure (22) correspondant à une plage de contact véhiculant ledit signal à protéger;
- une fente d'insertion (21) d'un circuit imprimé ;
et **caractérisé en ce que** ladite fente d'insertion et ladite au moins une terminaison de soudure sont disposées sur une même face dudit connecteur.
- un circuit imprimé (30) se logeant dans ladite fente d'insertion et conformé de sorte qu'il recouvre ladite terminaison de soudure, ledit circuit imprimé (30) comprend, sur au moins l'une de ses faces, au moins une couche de protection.

2. Système de protection selon la revendication 1, **caractérisé en ce que** ledit circuit imprimé, se logeant dans ladite fente d'insertion et conformé de sorte qu'il recouvre ladite terminaison de soudure, est un circuit imprimé flexible.

3. Système de protection selon la revendication 1, **caractérisé en ce que** ladite au moins une couche de protection comprend un circuit électrique treillissé.

4. Système de protection selon la revendication 1, **caractérisé en ce que** ledit connecteur est un connecteur de type micro SD.

5. Système de protection selon la revendication 1, **caractérisé en ce que** ledit connecteur comprend au moins deux plages de contact, lesdites au moins deux plages de contact étant alignées l'une devant l'autre dans le sens de retrait dudit circuit imprimé.

6. Connecteur (20) de forme globalement parallélépipédique rectangle **caractérisé en ce qu'**il comprend :
- à sa base, au moins une terminaison de soudure (22) correspondant à une plage de contact véhiculant un signal à protéger;
- une fente d'insertion (21) d'un circuit imprimé ;
et **caractérisé en ce que** ladite fente d'insertion et ladite au moins une terminaison de soudure sont disposées sur une même face dudit connecteur, de sorte que ladite au moins une terminaison de soudure puisse être recouverte par un circuit imprimé inséré dans ladite fente d'insertiom (21).

## Patentansprüche

1. System zum Schutz eines Signals in einem elektronischen Gerät, wobei das System **dadurch gekennzeichnet ist, dass** es Folgendes umfasst:
- eine Steckverbindung (20) mit allgemein rechteckiger parallelepipedischer Form, die Folgendes umfasst:
- an ihrer Basis mindestens ein Lötende (22), das einem Kontaktbereich entspricht, der das zu schützende Signal überträgt;
- einen Einschubschlitz (21) für eine gedruckte Schaltung; und **dadurch gekennzeichnet, dass** der Einschubschlitz und das mindestens eine Lötende auf einer selben Seite der Steckverbindung angeordnet sind,
- eine gedruckte Schaltung (30), die in dem Einschubschlitz aufgenommen wird und derart angepasst ist, dass sie das Lötende abdeckt, wobei die gedruckte Schaltung (30) auf mindestens einer ihrer Seiten mindestens eine Schutzschicht umfasst.

2. Schutzsystem nach Anspruch 1, **dadurch gekennzeichnet, dass** die gedruckte Schaltung, die in dem Einschubschlitz aufgenommen wird und derart angepasst ist, dass sie das Lötende abdeckt, eine biegsame gedruckte Schaltung ist.

3. Schutzsystem nach Anspruch 1, **dadurch gekennzeichnet, dass** die mindestens eine Schutzschicht einen gitterförmigen elektrischen Stromkreis umfasst.

4. Schutzsystem nach Anspruch 1, **dadurch gekennzeichnet, dass** die Steckverbindung eine Steckverbindung des Typs Micro SD ist.

5. Schutzsystem nach Anspruch 1, **dadurch gekennzeichnet, dass** der Verbinder mindestens zwei Kontaktbereiche umfasst, wobei die mindestens zwei Kontaktbereiche einer vor dem anderen in der Entnahmerichtung der gedruckten Schaltung ausgerichtet sind.

6. Steckverbindung (20) mit allgemein rechteckiger parallelepipedischer Form, **dadurch gekennzeichnet, dass** sie Folgendes umfasst:
- an ihrer Basis, mindestens ein Lötende (22), das einem Kontaktbereich entspricht, der ein zu schützendes Signal überträgt;
- einen Einschubschlitz (21) für eine gedruckte Schaltung;
und **dadurch gekennzeichnet, dass** der Einschubschlitz und das mindestens eine Lötende auf einer selben Seite der Steckverbindung angeordnet sind, derart, dass das mindestens eine Lötende durch eine gedruckte Schaltung abgedeckt werden kann, die in den Einschubschlitz (21) eingeschoben wird.

## Claims

1. System for protecting a signal within an electronic device, system **characterized in that** it comprises:
- a connector (20) with a generally rectangular parallelepiped shape comprising
- at its base, at least one solder termination (22) corresponding to a contact region conveying said signal to be protected;
- a slot (21) for inserting a printed circuit,
and **characterized in that** said slot for inserting and said at least one solder termination are disposed on a same face of said connector,
- a printed circuit (30) getting housed in said insertion slot and being shaped so that it covers said solder termination, said printed circuit (30) comprising at least one protection layer on at least one of its faces.

2. System for protecting according to claim 1, **characterized in that** said printed circuit that gets housed in said insertion slot and is shaped so that it covers said solder termination is a flexible printed circuit.

3. System for protecting according to claim 1, **characterized in that** said at least one protection layer comprises a latticed electric circuit.

4. System for protecting according to claim 1, **characterized in that** connector is a micro SD type connector.

5. System for protecting according to claim 1, **characterized in that** said connector comprises at least two contact regions, said at least two contact regions being aligned, one before the other, in the sense of the withdrawal of said printed circuit.

6. Connector (20) with a generally rectangular parallelepiped shape **characterized in that** it comprises:
- at its base, at least one solder termination (22) corresponding to a contact region conveying a signal to be protected;
- a slot (21) for inserting a printed circuit;
and **characterized in that** said insertion slot and said at least one solder termination are disposed on a same face of said connector, so that said at least one solder termination can be covered by a printed circuit that is inserted in said slot (21) for inserting.
